Europäisches Patentamt

European Patent Office

Office européen des brevets

(11) Veröffentlichungsnummer: **0 464 263 A2**

## EUROPÄISCHE PATENTANMELDUNG

(21) Anmeldenummer: **90124907.8**

(22) Anmeldetag: **20.12.90**

(51) Int. Cl.⁵: G01S 17/88, G01S 17/87

(30) Priorität: **27.06.90 DE 4020469**

(43) Veröffentlichungstag der Anmeldung:
**08.01.92 Patentblatt 92/02**

(84) Benannte Vertragsstaaten:
**BE DE FR GB IT NL**

(71) Anmelder: **SIEMENS AKTIENGESELLSCHAFT**
**Wittelsbacherplatz 2**
**W-8000 München 2(DE)**

(72) Erfinder: **Kranz, Wolfgang, Dipl.-Ing.**
**Kosegartenplatz 9**
**W-8000 München 83(DE)**
Erfinder: **Grage, Ludger, Dipl.-Ing.**
**Frühlingstrasse 46**
**W-8081 Eichenau(DE)**

(54) **Anordnung zum Erkennen von Hindernissen für Piloten tieffliegender Luftfahrzeuge.**

(57) Die nach dem Laserradar-Prinzip arbeitende Anordnung umfaßt einen Impuls-Laserentfernungsmesser (LEM) zur Abtastung eines vorgegebenen Sehfeldes und zur bildlichen Darstellung des Verlaufs des wahrgenommenen Hindernisses für den Piloten auf einem Display, wobei als Sender und als Empfänger des LEM jeweils ein Array von Halbleiter-Laserdioden bzw. von Empfangsdetektoren vorgesehen ist und die Abtastung des Sehfeldes mit einem maschennetzförmigen Muster erfolgt. Durch diese Maßnahmen wird der Aufwand für die einzelnen Komponenten der Anordnung minimiert und ein einfacher, kompakter Aufbau erzielt. Die Anordnung ist zur Hinderniswarnung für Luftfahrzeuge, insbesondere für tieffliegende Hubschrauber, geeignet.

FIG 3

EP 0 464 263 A2

Die Erfindung bezieht sich auf eine Anordnung zum Erkennen von Hindernissen, wie z.B. Freileitungen, Drahtseilen, Masten o.dgl., für Piloten tieffliegender Luftfahrzeuge, insbesondere Hubschrauber, mit einem aus Sender und Empfänger bestehenden Impuls-Laserentfernungsmesser zur Abtastung eines vorgegebenen Gesichtsfeldes und zur bildlichen Darstellung des Verlaufs des wahrgenommenen Hindernisses. Eine derartige Anordnung ist aus der DE-AS 24 02 537 bekannt.

Tieffliegende Luftfahrzeuge, wie z.B. Hubschrauber im Tiefflugeinsatz, sind insbesondere bei Nacht oder bei schlechten Sichtverhältnissen durch vom Piloten kaum wahrnehmbare Hindernisse, wie z.B. Freileitungen, Drahtseile von Seilbahnen, Masten o.dgl., gefährdet. Zur Erkennung derartiger Hindernisse wurden bereits Warngeräte vorgeschlagen, die nach dem Laserradar-Prinzip arbeiten. Bei der aus der DE-AS 24 02 537 bekannten Anordnung erfolgt die Abtastung des interessierenden Geländes in konzentrischen Kreisen oder spiralenförmig mit dem Laserstrahl eines aus Sender und Empfänger bestehenden Impuls-Laserentfernungsmessers. Der Verlauf des wahrgenommenen Hindernisses wird auf einem Bildschirm dargestellt. Die Abtastung eines vorgegebenen Sehfeldes mit einem einzigen Laserstrahl erfordert jedoch relativ viel Zeit. Außerdem sind hierzu aufwendige Komponenten, wie z.B. ein Laser mit hoher Pulsfolgefrequenz und ein komplizierter Scannermechanismus mit hoher Scanspiegelfrequenz in Azimut und Elevation nötig. Dieser Aufwand wirkt sich auch auf Größe und Gewicht der Anordnung ungünstig aus.

Der Erfindung liegt daher die Aufgabe zugrunde, bei einer Anordnung der eingangs genannten Art einen möglichst einfachen, kompakten Aufbau zu erzielen und den Aufwand für die einzelnen Komponenten möglichst gering zu halten.

Diese Aufgabe wird bei einer Anordnung der eingangs genannten Art gemäß der Erfindung dadurch gelöst, daß als Sender und als Empfänger jeweils ein Array von Halbleiter-Laserdioden bzw. von Empfangsdetektoren vorgesehen ist, und daß die Abtastung des Sehfeldes durch die gebündelten Laserimpulse in einem groben Raster mit einem maschennetzförmigen Muster erfolgt.

Der Erfindung liegt die Erkenntnis zugrunde, daß der Aufwand für die Abtastung eines vorgegebenen Sehfeldes durch die Verwendung eines Arrays von Halbleiterlasern bzw. von Empfangsdetektoren minimiert werden kann. Bei einer derartigen, nach dem Laserradar-Prinzip mit Direktempfang arbeitenden Anordnung wird als Strahlungsquelle für den Sender des Laserentfernungsmessers daher eine Vielzahl von im Impulsbetrieb arbeitenden Halbleiter-Laserdioden eingesetzt. Solche Halbleiterlaser haben Spitzenleistungen um 100 W und hohe Pulsfolgefrequenzen (einige 10 kHz) und sind Stand der Technik. Sie sind gut modulierbar, klein, leicht und kostengünstig, lassen sich an einfache faseroptische Komponenten koppeln und leicht zu einem Array integrieren. Diese Vorteile können zur Reduzierung der Pulsfolgefrequenz der Laserdioden und zur Reduzierung der Scanspiegelfrequenzen ausgenutzt werden. Außerdem sind diese Vorteile sowohl in ein- und aufbautechnischer Hinsicht als auch in Bezug auf Größe und Gewicht der Anordnung von Bedeutung. Ein weiterer Vorteil der Verwendung eines Halbleiter-Laserdioden-Arrays für den Sender des Laserentfernungsmessers besteht darin, daß damit ein Multibeam-Laserradar mit einer Vielzahl von Strahlungsquellen zur Abtastung geschaffen ist. Die erfindungsgemäße Anordnung ist somit nicht mehr von der Funktion und Zuverlässigkeit einer einzigen Strahlungsquelle abhängig, d.h. die Anordnung ist auch bei Ausfall einzelner Strahlungsquellen weiterhin funktionsfähig, was bei einer Abtastung eines Sehfeldes mit dem Laserstrahl eines einzigen Lasersenders und bei dessen Ausfall nicht gewährleistet ist. Die Abtastung eines vorgegebenen Sehfeldes mit einem derartigen Multibeam-Laserradar läßt sich im Vergleich zu einer Abtastung mit dem Laserstrahl eines einzigen Lasersenders außerdem auch mit einem geringeren Zeitaufwand durchführen.

Für den Empfänger des Laserentfernungsmessers ist ein Array von Empfangsdetektoren vorgesehen. Vorzugsweise bestehen diese aus Fotodioden, z.B. Si-Dioden. Diese Empfängertechnologie läßt sich ebenfalls mit Faseroptik gut an die Aufgabe anpassen und ist auch Stand der Technik.

Ein weiterer Grundgedanke der erfindungsgemäßen Anordnung ist in der maschennetzförmigen Bildabtastung zu sehen. Darin liegt eine weitere Maßnahme zur Reduzierung des Aufwandes, da sich eine solche Bildabtastung infolge niedrig zu haltender Scanspiegelfrequenzen mit einem einfachen Scanneraufbau durchführen läßt. Ein maschennetzförmiges Abtastmuster hat zwar Lücken und erzeugt weniger Bildpunkte, ermöglicht aber eine geringere Abtastzeit und eine Einsparung von Laserdioden. Außerdem lassen sich die Maschenweite des Abtastmusters und die Anzahl der Laserdioden unter Berücksichtigung des Entfernungsbereichs der Anordnung jederzeit optimal so wählen, daß die gemäß dem Einsatzzweck der Anordnung wahrzunehmenden Hindernisse in einer bestimmten, vom Anwender festgelegten Entfernung ohne weiteres erkennbar sind. Dies bedeutet, daß gewisse Hindernisse in bestimmter Entfernung, z.B. Drähte von etwa 3 mm im Durchmesser und in einer Entfernung von etwa 300 m, bei geeigneter Wahl von Maschenweite und Anzahl der Laserdioden ohne weiteres detektierbar sind.

Vorteilhafte Ausgestaltungen einer Anordnung nach Anspruch 1 sind in den Unteransprüchen angegeben.

Im Falle der Verwendung eines im 10 $\mu$m -Bereich arbeitenden Laserentfernungsmessers erhöht sich der Aufwand für die Laserkomponenten und die Optik weiter. Daher ist bei einer erfindungsgemäßen Anordnung in bevorzugter Weise das Sender-Array aus GaAs-Halbleiter-Laserdioden mit der Wellenlänge $\lambda$ = 0,9 $\mu$m gebildet. Ein Laserradar mit Halbleiter-Laserdioden dieser Wellenlänge läßt sich mit erheblich geringerem Aufwand und kostengünstiger realisieren als ein im 10 $\mu$m -Bereich arbeitendes Laserradar. Für eine erfindungsgemäße Anordnung kommen aber auch Halbleiterlaser mit einer Wellenlänge bei 1,3 oder 1,5 $\mu$m in Betracht. Halbleiterlaser im 1,5 $\mu$m - Bereich haben den Vorteil völliger Augensicherheit und sind durch Nachtsichtgeräte nicht detektierbar.

Vorteilhafterweise sind die Halbleiter-Laserdioden und die Empfangsdetektoren an faseroptische Komponenten gekoppelt. Der Vorteil dabei ist, daß die Halbleiter-Laserdioden und ihre Ansteuerung ebenso wie die Empfangsdetektoren in einer von den optischen Komponenten der Anordnung, d.h. vom Scanner und der Optik, abgesetzten Elektronikbox angeordnet werden können.

Zweckmäßigerweise ist die Impulsbreite der Laserimpulse der Halbleiter-Laserdioden auf wenige Nanosekunden (etwa 5-100 nsec) begrenzt. Durch diese Maßnahme kann die mittlere Leistung der Halbleiter-Laserdioden gering gehalten und eine ausreichende Tiefenauflösung von z.B. weniger als 5 m bei 30 nsec Impulsbreite erzielt werden.

Bei einer erfindungsgemäßen Anordnung ist es vorteilhaft, wenn das Sehfeld des Empfängers mit einer gemeinsamen Frontlinse an das des Senders angepaßt ist. Die Verwendung der gleichen Linse für Sender und Empfänger ist durch eine geeignete Wahl der Abmessungen der Halbleiter-Laserdioden und der Empfangsdetektoren möglich. Durch Einbringen einer Anpassungsoptik ist es jedoch auch möglich, in ihren Abmessungen unterschiedliche Halbleiter-Laserdioden und Empfangsdetektoren zu verwenden.

Im Hinblick auf den Aufwand bei den optischen Komponenten ist es vorteilhaft, wenn das Sender- und das Empfänger-Array in einem koaxialen System mit gemeinsamer Frontlinse angeordnet sind. Die optische Kopplung von Sende- und Empfangszweig in das koaxiale System erfolgt zweckmäßigerweise mittels eines Strahlteilers.

Bei einer ersten vorteilhaften Ausführungsform einer erfindungsgemäßen Anordnung sind die Halbleiter-Laserdioden bzw. die Empfangsdetektoren jeweils in mindestens zwei zueinander parallelen Spalten angeordnet, wobei der Abstand der Halbleiter-Laserdioden bzw. der Empfangsdetektoren einer Spalte voneinander der Maschenweite entspricht, ferner der Abstand der Spalten voneinander gleich einer halben Maschenweite ist, und die Halbleiter-Laserdioden bzw. die Empfangsdetektoren jeder zweiten Spalte gegen die Halbleiter-Laserdioden bzw. die Empfangsdetektoren der benachbarten Spalten in Elevation um eine halbe Maschenweite versetzt sind. Hierbei erfolgt die Azimutabtastung über einen Scanspiegel, wobei bei jedem Scan über den Azimut ein Bild erzeugt wird. Dabei ist der Elevationswinkel in eine entsprechende Zahl von Zeilen aufgeteilt und je Zeile eine Halbleiter-Laserdiode vorgesehen, die mittels eines Mikroscan-Spiegels über wenige Millirad in einem zick-zack-förmigen Muster in Azimut über das Sehfeld geführt ist. Bei einer derartigen Anordnung läßt sich das maschennetzförmige Abtastmuster bei entsprechender Konfiguration des Sender- und des Empfänger-Arrays mit einem einfachen Scanner in einem Scan erzeugen.

Bei einer zweiten Ausführungsform einer erfindungsgemäßen Anordnung sind die Halbleiter-Laserdioden bzw. die Empfangsdetektoren jeweils in einer oder mehreren zueinander parallelen Spalten lückenlos und ohne Überlappung untereinander angeordnet. Dabei ist das maschennetzförmige Abtastmuster durch eine entsprechende Steuerung des Auslösezeitpunktes der in einer Spalte untereinander liegenden Halbleiter-Laserdioden während der Schwenkung über Azimut erzeugt. Damit lassen sich Maschenweite und Maschenwinkel, d.h. der Winkel der Netzstreifen des Abtastmusters gegen Azimut, durch Veränderung der Verzögerungszeit zwischen den einzelnen Laserimpulsen, d.h. elektronisch, verändern. Bei dieser Ausführungsform ist ein Mikroscan-Spiegel nicht nötig.

Bei einer weiteren Ausführungsform ist vorgesehen, daß jeweils eine oder mehrere Zeilen im Array der Halbleiter-Laserdioden bzw. der Empfangsdetektoren ausgelassen und durch eine oder mehrere Interlace-Bewegungen eines Scanspiegels aufgefüllt sind. Hierbei wird also der Aufwand an Halbleiter-Laserdioden bzw. Empfangsdetektoren geringer und damit das Sender- bzw. Empfänger-Array einfacher. Dabei muß jedoch proportional zur Anzahl der Interlace-Bewegungen die Pulsfolgefrequenz der Halbleiter-Laserdioden und die Scanfrequenz des Azimut-Scanspiegels erhöht werden, um einen höheren Zeitaufwand als bei den beiden zuvor genannten Ausführungsformen zu vermeiden. Die Erzeugung des maschennetzförmigen Abtastmusters und damit der Bildaufbau erfolgen bei dieser Ausführungsform in zwei oder mehreren Scans, wobei entweder der Azimutspiegel zusätzlich in Elevation um eine Maschenweite weiter oder - in bevorzugter Weise - der Mikroscan-Spiegel zusätzlich in der Elevation bewegt wird. Dabei kann es aufgrund von Winkelbewegungen z.B. eines tieffliegenden Hubschraubers relativ zur Szene u.U.

vorkommen, daß die Netzmaschen nicht ganz geschlossen werden.

Ausführungsbeispiele einer erfindungsgemäßen Anordnung sind im folgenden anhand der Zeichnung näher beschrieben.

Es zeigen

Fig. 1 den Aufbau der Anordnung

Fig. 2 und 3 den Aufbau eines für den Impuls-Laserentfernungsmesser der Anordnung vorgesehenen Sender-Arrays bzw. eines Empfänger-Arrays,

Fig. 4 das bei der Anordnung erzeugte Abtastmuster,

Fig. 5 einen tieffliegenden Hubschrauber, in dessen Flugbahn sich eine Freileitung als zu erkennendes Hindernis befindet, mit einem Ausschnitt des Abtastmusters,

Fig. 6 einen anderen Aufbau eines Sender- bzw. Empfänger-Arrays,

Fig. 7 das Abtastmuster für diese Arrays und

Fig. 8 eine Auswerte-Einrichtung.

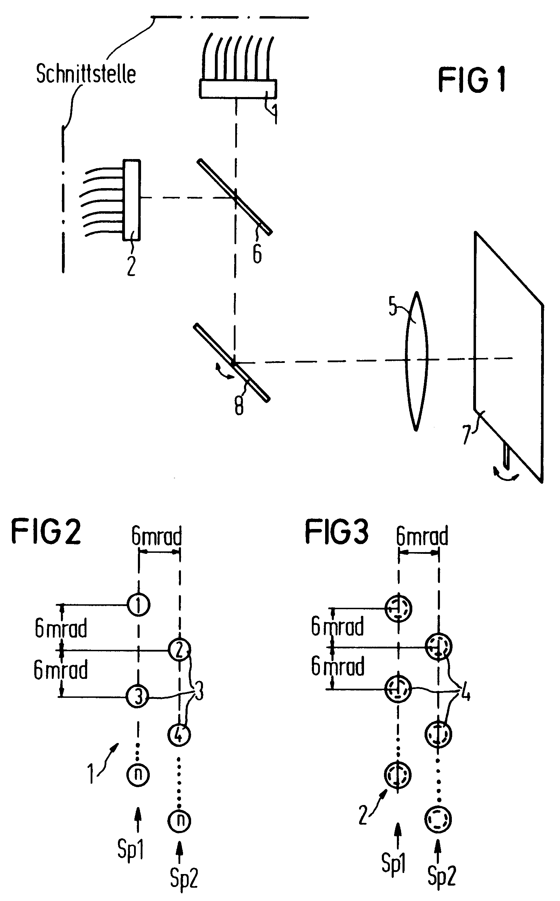

Die Anordnung nach Fig. 1 stellt ein Laserradar mit einem aus Sender und Empfänger bestehenden Impuls-Laserentfernungsmesser und einem Scanner mit Optik dar. Als Sender und als Empfänger ist jeweils ein Array 1 (Fig.1,2) von Halbleiter-Laserdioden 3 (Sender-Array) bzw. ein Array 2 (Fig.1,3) von Empfangsdetektoren 4 (Empfänger-Array) vorgesehen. Das Sender-Array 1 ist aus GaAs-Halbleiter-Laserdioden 3 mit der Wellenlänge $\lambda$ = 0,9 $\mu$m gebildet. Die Halbleiter-Laserdioden 3 des Sender-Arrays 1 sind an Glasfasern gekoppelt und zu dem in Fig.2 angedeuteten Array konfiguriert. Die Empfangsdetektoren 4 für das Empfänger-Array 2 bestehen aus Fotodioden, z.B. Si-Dioden, und werden ebenfalls an Glasfasern gekoppelt.

Jeweils ein Empfangsdetektor 4 des Empfänger-Arrays 2 ist einer Halbleiter-Laserdiode 3 des Sender-Arrays 1 zugeordnet, wobei die winkelmäßige Anordnung des Empfänger-Arrays 2 derjenigen des Sender-Arrays 1 entspricht, d.h. die Halbleiter-Laserdioden 3 und die Empfangsdetektoren 4 sind - wie die Figuren 2 und 3 zeigen - in der gleichen, später noch genauer zu erläuternden Konfiguration angeordnet.

Das Sender- und das Empfänger-Array 1 bzw. 2 sind in einem koaxialen System mit einer gemeinsamen Frontlinse 5 angeordnet, welche das Sehfeld des Empfängers an das des Senders anpaßt. Zur optischen Kopplung von Sende- und Empfangszweig in das koaxiale System ist ein Strahlteiler 6 vorgesehen, der den Empfangszweig in den Sendezweig einkoppelt bzw. aus dem koaxialen System auskoppelt. Der Scanner besteht hier aus einem in Empfangsrichtung gesehen vor der Frontlinse 5 angeordneten Scanspiegel 7 zur Azimutabtastung und einem zwischen der Frontlinse 5 und dem Strahlteiler 6 in das koaxiale System eingefügten Mikroscan-Spiegel 8 zur Elevationsabtastung.

Die Anordnung nach Fig.1 arbeitet bei einer Laserdivergenz der Halbleiter-Laserdioden 3 um 1 mrad mit einer Grobrasterabtastung des vorgegebenen Sehfeldes (z.B. 30° in der Elevation und 60° im Azimut), da eine flächendeckende Abtastung eine sehr hohe Bildpunktzahl und damit auch hohe Laserpulsfolgefrequenzen (PRF) bzw. Scanspiegelfrequenzen zur Folge hätte. Um die Pulsfolgefrequenz PRF zu verringern, werden mehrere Halbleiter-Laserdioden 3 und mehrere Empfangsdetektoren 4 verwendet.

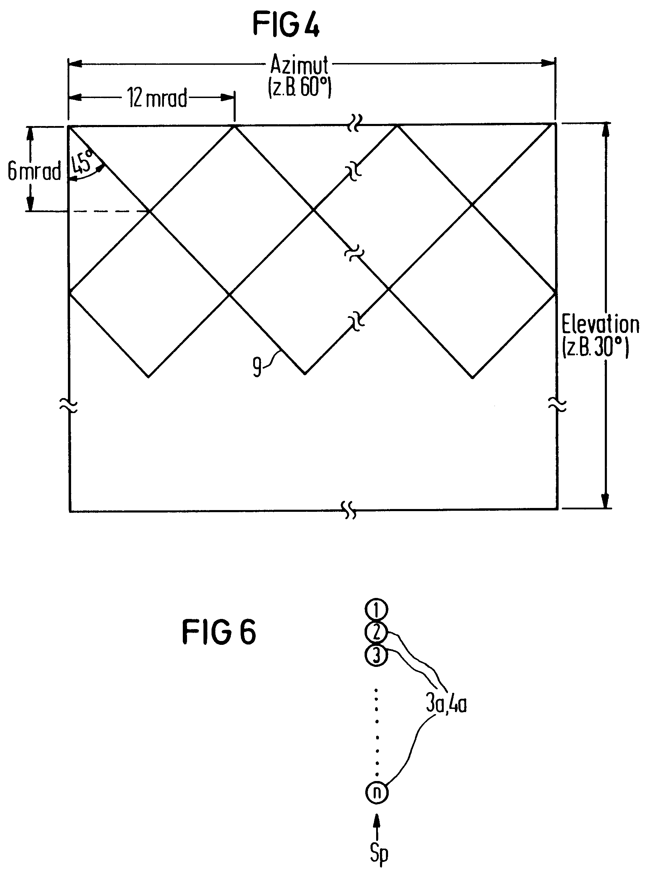

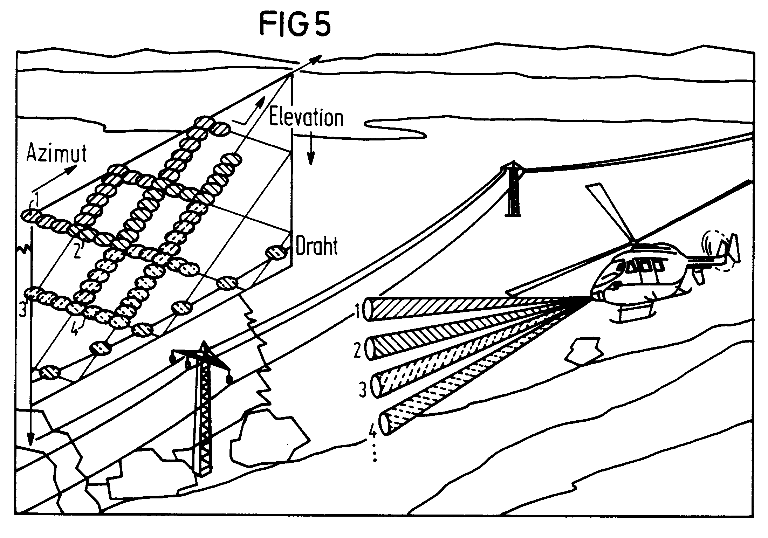

Das Sehfeld wird, wie in den Fig.4 und 5 dargestellt ist, mit einem maschennetzförmigen Muster abgetastet, wobei die Maschenweite des Abtastmusters in Abhängigkeit von der kleinsten zu detektierenden Größe eines in einer bestimmten Entfernung noch wahrzunehmenden Hindernisses gewählt ist.

Für ein in etwa 300 m noch wahrzunehmendes Hindernis von etwa 3 mm im Durchmesser beträgt die Maschenweite beispielsweise 12 mrad, was einer Auflösung von 6 m in 500 m Entfernung entspricht. Die Breite der lückenlosen, unter einem Winkel von 45° gegen Azimut über das Sehfeld gelegten Netzstreifen 9 des Abtastmusters entspricht der Laserdivergenz von beispielsweise 1 mrad.

Um nun das maschennetzförmige Abtastmuster nach den Fig.4 und 5 zu erzeugen, sind die Halbleiter-Laserdioden 3 und die Empfangsdetektoren 4 in entsprechender Weise in dem Sender-Array 1 bzw. in dem Empfänger-Array 2 konfiguriert. Demnach sind die Halbleiter-Laserdioden 3 in Fig.2 und die Empfangsdetektoren 4 in Fig.3 jeweils in mindestens zwei zueinander parallelen Spalten Sp1 und Sp2 angeordnet, wobei der Abstand der Halbleiter-Laserdioden 3 bzw. der Empfangsdetektoren 4 innerhalb der Spalte Sp1 bzw. Sp2 gleich der Maschenweite, im Beispiel also 12 mrad, ist. Der Abstand der Spalten Sp1 und Sp2 voneinander ist gleich einer halben Maschenweite, also 6 mrad, wobei die Halbleiter-Laserdioden 3 bzw. Empfangsdetektoren 4 jeder zweiten Spalte, also der Spalten Sp2 und gegebenenfalls Sp4, Sp6 usw. gegen die Halbleiter-Laserdioden 3 bzw. die Empfangsdetektoren 4 der benachbarten Spalten, also der Spalten Sp1 und gegebenenfalls der Spalten Sp3, Sp5 usw., in Elevation um eine halbe Maschenweite, also um 6 mrad, versetzt sind.

Die Abtastung des Sehfeldes in Elevation und Azimut erfolgt nun mit Hilfe der gem. Fig.2 im Sender-Array 1 konfigurierten Halbleiter-Laserdioden 3, wobei der Elevationswinkel in eine entsprechende Zahl von Zeilen aufgeteilt und je Zeile eine Halbleiter-Laserdiode 3 vorgesehen ist. Jede Halbleiter-Laserdiode wird durch einen Mikroscan über einen kleinen Winkel, d.h. über wenige Millirad, in der Elevation hin- und herbewegt. Der Mikroscan erfolgt bei einer Maschenweite von z.B. 12 mrad über eine Zeilenhöhe von einer halben Maschenweite, also über 6 mrad. Auf diese Weise werden die Halbleiter-Laserdioden 3 - wie besonders deutlich in Fig.5 zu sehen ist - in einem zickzack-förmigen Muster in Azimut über das Sehfeld geführt. Zur Durchführung des Mikroscans ist der bereits erwähnte Mikroscan-Spiegel 8 vorgesehen. Seine Scanfrequenz ist durch das Verhältnis des Sehfeldwinkels im Azimut zur Breite des Mikroscans (Maschenweite) bestimmt. So beträgt seine Scanfrequenz bei 60° Azimutwinkel und 12 mrad Mikroscanbreite z.B. 87 Hz. Die Azimutabtastung erfolgt - wie bereits erwähnt - durch den vor der Optik befindlichen Scanspiegel 7, wobei bei jedem Scan über den Azimut ein Bild erzeugt wird. Die Scanfrequenz des Azimut-Scanspiegels 7 wird durch die gewünschte Bildfolgefrequenz (beispielsweise 5 Hz) und die Anzahl der Halbleiter-Laserdioden 3 bzw. der Empfangsdetektoren 4 bestimmt, wenn diese den gesamten Sehfeldwinkel in der Elevation abdecken. Bei 30° Elevationswinkel sind ca. 44 Halbleiter-Laserdioden-Paare, also ca 88 Dioden für zwei Spalten, erforderlich. Da in diesem Fall bei jedem Schwenk über die Szene ein Bild entsteht, beträgt die Scanfrequenz des Azimut-Scanspiegels 7 dann 2,5 Hz.

Ein Ausschnitt des durch die scannenden Halbleiter-Laserdioden 3 bzw. deren gebündelte Laserimpulse Zeile für Zeile zick-zack-förmig geschriebenen, insgesamt gesehen maschennetzförmigen Abtastmusters sowie der Verlauf eines Drahthindernisses ist in Fig.5 dargestellt. Jede zickzack-förmige Zeile wird von einer Halbleiter-Laserdiode 3, nämlich von der in Fig. 2 mit
"1" gekennzeichneten Halbleiter-Laserdiode in Spalte Sp1 bzw.der mit
"2" gekennzeichneten Halbleiter-Laserdiode in Spalte Sp2 bzw.der mit
"3" gekennzeichneten Halbleiter-Laserdiode in Spalte Sp1 bzw.der mit
"4" gekennzeichneten Halbleiter-Laserdiode in Spalte Sp2 usw.
geschrieben. Hierbei überlappen sich - wie in Fig.5 deutlich zu sehen ist - die einzelnen gebündelten Laserimpulse geringfügig, z.B. überdecken sie sich zu 20 % (= Überlappungsfaktor 0,8). Die Pulsfolgefrequenz PRF der Halbleiter-Laserdioden 3 ergibt sich aus der gewünschten Bildfolgefrequenz, dem abzutastenden Azimutwinkel, der Laserdivergenz, dem Winkel des Mikroscans und der Einrechnung einer gewissen Überlappung der einzelnen Laserkeulen. Bei 5 Hz Bildfolge, einem Azimutwinkel von 60°, einem Mikroscanwinkel von 45° und einem Überlappungsfaktor von 0,8 ergeben sich beispielsweise 9,3 kHz Pulsfolgefrequenz. Dieser Wert ist mit heute erhältlichen GaAs-Halbleiter-Laserdioden der Wellenlänge 0,9 $\mu$m realisierbar. Die Impulsbreite der Laserimpulse wird auf wenige Nanosekunden begrenzt, z.B. auf 30 nsec, um die mittlere Leistung der Halbleiterlaser gering zu halten und eine ausreichende Tiefenauflösung < 5 m zu ermöglichen.

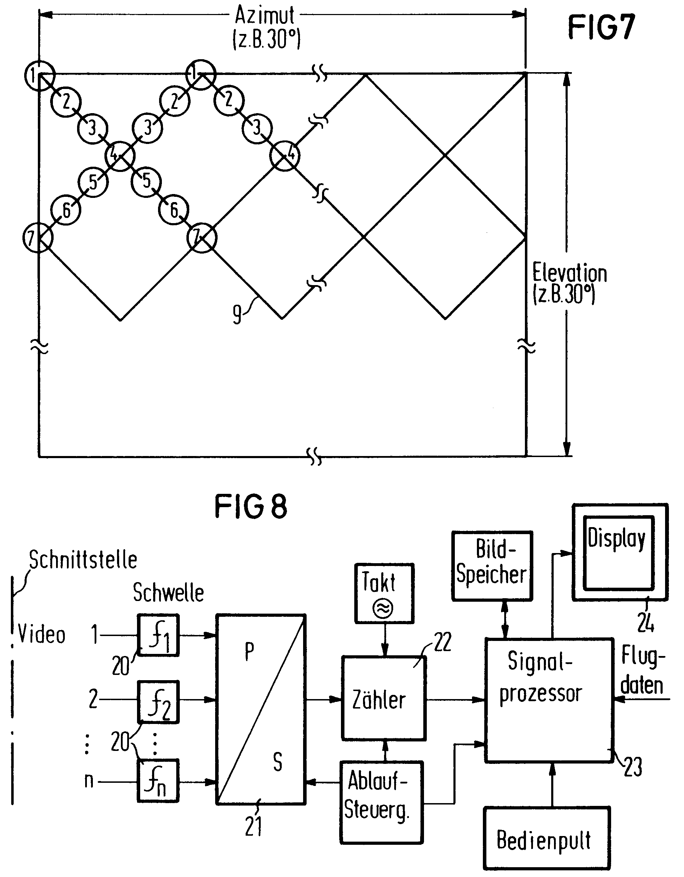

Bei einer anderen Ausführungsform nach Fig.6 sind die Halbleiter-Laserdioden 3a und die Empfangsdetektoren 4a jeweils in einer Spalte Sp oder in mehreren, zueinander parallelen Spalten ohne Lücken und ohne Überlappung untereinander angeordnet. Das maschennetzförmige Abtastmuster (Fig.7) wird hierbei dadurch erzeugt, daß die Laserimpulse während des Schwenks über den Azimut zum richtigen Zeitpunkt ausgelöst werden. Damit lassen sich Maschenweite und -winkel durch Veränderung der Verzögerungszeit zwischen den einzelnen Laserimpulsen, d.h. elektronisch, verändern. In diesem Fall ist der Mikroscan-Spiegel nicht unbedingt nötig.

In Abwandlung dieser beiden Ausführungsformen können jeweils eine oder mehrere Zeilen im Sender- bzw. im Empfänger-Array ausgelassen werden. Diese werden dann durch eine oder mehrere Interlace-Bewegungen eines Scanspiegels, vorzugsweise des Mikroscan-Spiegels 8, aufgefüllt.

Die von den Empfangsdetektoren 4 gewonnenen Signale der gemessenen Entfernungswerte werden mit an die Laserimpulsbreite angepaßten Verstärkern verstärkt und dann einer Auswerte-Einrichtung zugeführt, welche an der in Fig.1 gekennzeichneten Schnittstelle der Anordnung ansetzt. Der Aufbau der Auswerte-Einrichtung ist schematisch in Fig.8 in einem Blockschaltbild aufgezeigt. Zur Auswertung werden die Videosignale zunächst über analoge Schwellen 20 digitalisiert und dann in einem Parallel/Serien-Umsetzer 21 in einen kontinuierlichen Datenstrom verwandelt. Ein nachfolgender Zähler 22 wertet die Entfernung aus. Dabei werden die für Entfernungsmesser bekannten Methoden eingesetzt. Die gemessenen Entfernungswerte, die Positionswerte der Scanspiegel 7,8 und die Werte für den zeitlichen Ablauf werden dann in einem Signalprozessor 23 weiter verarbeitet. Dieser speichert die Informationen abhängig von der Entfernung und setzt sie zu einem Bild zusammen. Aus diesem Bild der Gesamtszene wird dann das Bild des Hindernisses extrahiert und dem Piloten auf einem Display 24 angezeigt. In diesem Bild sind dann Darstellungen, wie Entfernungsmarken, Sensorfunktionen, vergrößerte Bildausschnitte, Gerätefunktionen oder die Einblendung/Einrechnung von aus dem Bordrechner übertragenen Flugdaten möglich. Ferner kann die bildliche Darstellung noch durch Intensität oder Farbe bzw. akustische oder optische Warnsignale unterstützt werden.

**Patentansprüche**

1. Anordnung zum Erkennen von Hindernissen, wie z.B. Freileitungen, Drahtseilen, Masten o.dgl., für Piloten tieffliegender Luftfahrzeuge, insbesondere Hubschrauber, mit einem aus Sender und Empfänger bestehenden Impuls-Laserentfernungsmesser zur Abtastung eines vorgegebenen Gesichtsfeldes und zur bildlichen Darstellung des Verlaufs des wahrgenommenen Hindernisses,
   **dadurch gekennzeichnet**, daß als Sender und als Empfänger jeweils ein Array (1,2) von Halbleiter-Laserdioden (3) bzw. von Empfangsdetektoren (4) vorgesehen ist, und daß die Abtastung des Sehfeldes durch die gebündelten Laserimpulse in einem groben Raster mit einem maschennetzförmigen Muster erfolgt.

2. Anordnung nach Anspruch 1,
   **dadurch gekennzeichnet**, daß das Sender-Array (1) aus GaAs-Halbleiter-Laserdioden (3) mit der Wellenlänge $\lambda$ = 0,9 $\mu$m gebildet ist.

3. Anordnung nach Anspruch 1 oder 2,
   **dadurch gekennzeichnet**, daß die Empfangsdetektoren (4) aus Fotodioden, z.B. aus Si-Dioden, bestehen.

4. Anordnung nach einem der Ansprüche 1 bis 3,
   **dadurch gekennzeichnet**, daß die Halbleiter-Laserdioden (3) und die Empfangsdetektoren (4) in der gleichen Konfiguration angeordnet sind.

5. Anordnung nach einem der vorhergehenden Ansprüche,
   **dadurch gekennzeichnet**, daß die Halbleiter-Laserdioden (3) und die Empfangsdetektoren (4) an faseroptische Komponenten gekoppelt sind.

6. Anordnung nach einem der vorhergehenden Ansprüche,
   **dadurch gekennzeichnet**, daß die Impulsbreite der Laserimpulse der Halbleiter-Laserdioden (3) auf wenige Nanosekunden (etwa 5-100 nsec) begrenzt ist.

7. Anordnung nach einem der vorhergehenden Ansprüche,
   **dadurch gekennzeichnet**, daß die Laserdivergenz der Halbleiter-Laserdioden (3) bei wenigen Millirad, z.B. bei etwa 1 mrad, liegt.

8. Anordnung nach einem der vorhergehenden Ansprüche,
   **dadurch gekennzeichnet**, daß die Maschenweite des Abtastmusters in Abhängigkeit von der kleinsten zu detektierenden Größe eines in einer bestimmten Entfernung noch wahrzunehmenden Hindernisses gewählt ist.

9. Anordnung nach einem der vorhergehenden Ansprüche,
   **dadurch gekennzeichnet**, daß die Maschenweite des Abtastmusters 12 mrad ist.

10. Anordnung nach einem der vorhergehenden Ansprüche,
    **dadurch gekennzeichnet**, daß die Netzstreifen (9) des Abtastmusters lückenlos unter einem Winkel von 45º gegen Azimut über das Sehfeld gelegt sind.

11. Anordnung nach einem der vorhergehenden Ansprüche,
    **dadurch gekennzeichnet**, daß die Breite der Netzstreifen (9) der Laserdivergenz der Halbleiter-Laserdioden entspricht.

12. Anordnung nach einem der vorhergehenden Ansprüche,
    **dadurch gekennzeichnet**, daß die Azimutabtastung über einen Scanspiegel (7) erfolgt und bei jedem Scan über den Azimut ein Bild erzeugt wird.

13. Anordnung nach einem der vorhergehenden Ansprüche,
    **dadurch gekennzeichnet**, daß das Sender- und das Empfänger-Array (1 bzw. 2) in einem koaxialen System mit gemeinsamer Frontlinse (5) angeordnet sind.

14. Anordnung nach Anspruch 13,
    **dadurch gekennzeichnet**, daß das Sehfeld des Empfängers mit der gemeinsamen Frontlinse (5) an das des Senders angepaßt ist.

15. Anordnung nach Anspruch 13 oder 14,
    **dadurch gekennzeichnet**, daß die optische Kopplung von Sende- und Empfangszweig in das koaxiale System mittels eines Strahlteilers (6) erfolgt.

16. Anordnung nach einem der Ansprüche 13 bis 15,
    **dadurch gekennzeichnet**, daß der Azimut-Scanspiegel (7) in Empfangsrichtung gesehen vor der Frontlinse (5) angeordnet ist.

17. Anordnung nach einem der vorhergehenden Ansprüche,
    **dadurch gekennzeichnet**, daß die Halbleiter-Laserdioden (3) bzw. die Empfangsdetektoren (4) jeweils in mindestens zwei zueinander parallelen Spalten (Sp1, Sp2) angeordnet sind, daß der Abstand der Halbleiter-Laserdioden (3) bzw. der Empfangsdetektoren (4) einer Spalte (Sp1, Sp2) voneinander der Maschenweite entspricht, daß der Abstand der Spalten (Sp1, Sp2) voneinander einer halben Maschenweite ist, und daß die Halbleiter-Laserdioden (3) bzw. die Empfangsdetektoren (4) jeder zweiten Spalte (Sp2, Sp4, ...) gegen die Halbleiter-Laserdioden (3) bzw. die Empfangsdetektoren (4) der benachbarten Spalten (Sp1, Sp3, ...) in Elevation um eine halbe Maschenweite versetzt sind.

18. Anordnung nach Anspruch 17,
**dadurch gekennzeichnet**, daß der Elevationswinkel in eine entsprechende Zahl von Zeilen aufgeteilt und je Zeile eine Halbleiter-Laserdiode (3) vorgesehen ist, die mittels eines Mikroscan-Spiegels (8) über wenige Millirad in einem zick-zack-förmigen Muster in Azimut über das Sehfeld geführt ist.

19. Anordnung nach Anspruch 18,
**dadurch gekennzeichnet**, daß der Mikroscan über eine Zeilenhöhe von einer halben Maschenweite erfolgt.

20. Anordnung nach Anspruch 18 oder 19,
**dadurch gekennzeichnet**, daß der Mikroscan-Spiegel (8) zwischen der Frontlinse (5) und dem Strahlteiler (6) angeordnet ist.

21. Anordnung nach einem der Ansprüche 18 bis 20,
**dadurch gekennzeichnet**, daß die Scanfrequenz des Mikroscan-Spiegels (8) durch das Verhältnis des Sehfeldwinkels in Azimut zur Breite des Mikroscans (Maschenweite) bestimmt ist.

22. Anordnung nach einem der Ansprüche 17 bis 20,
**dadurch gekennzeichnet**, daß sich die gebündelten Laserimpulse geringfügig überlappen.

23. Anordnung nach einem der Ansprüche 1 bis 16, **dadurch gekennzeichnet**, daß die Halbleiter-Laserdioden (3a) bzw. die Empfangsdetektoren (4a) jeweils in einer oder mehreren zueinander parallelen Spalten (Sp) lückenlos und ohne Überlappung untereinander angeordnet sind.

24. Anordnung nach Anspruch 23,
**dadurch gekennzeichnet**, daß das maschennetzförmige Abtastmuster durch eine entsprechende Steuerung des Auslösezeitpunktes der in einer Spalte untereinander liegenden Halbleiter-Laserdioden (3a) während der Schwenkung über Azimut erzeugt ist.

25. Anordnung nach einem der vorhergehenden Ansprüche,
**dadurch gekennzeichnet**, daß jeweils eine oder mehrere Zeilen im Array (1,2) der Halbleiter-Laserdioden (3,3a) bzw. der Empfangsdetektoren (4,4a) ausgelassen und durch eine oder mehrere Interlace-Bewegungen eines Scanspiegels (7,8) aufgefüllt sind.

26. Anordnung nach einem der vorhergehenden Ansprüche,
**dadurch gekennzeichnet**, daß die gemessenen Entfernungswerte, die Positionswerte der Scanspiegel (7,8) und die Werte für den zeitlichen Ablauf in einem Signalprozessor (23) verarbeitet und zu einem Bild der Gesamtszene zusammengesetzt werden, aus dem das Bild des Hindernisses extrahiert und dem Piloten angezeigt wird.

FIG 1

Schnittstelle

FIG 2

6 mrad

6 mrad

6 mrad

① ② ③ ④ ⓝ

Sp1  Sp2

FIG 3

6 mrad

6 mrad

6 mrad

Sp1  Sp2

## FIG 4

Azimut
(z.B 60°)

12 mrad

6 mrad 45°

Elevation
(z.B. 30°)

9

## FIG 6

① 
② 
③ 

3a,4a

ⓝ

Sp

FIG 5

FIG 7

Azimut
(z.B. 30°)

Elevation
(z.B. 30°)

FIG 8

Schnittstelle

Schwelle

Video

Takt

Bild-Speicher

Display

Zähler

Signal-prozessor

Flug-daten

Ablauf-Steuerg.

Bedienpult